# EUROPÄISCHE PATENTANMELDUNG

(11) **EP 3 231 573 A1**
(43) Veröffentlichungstag der Anmeldung: **18.10.2017**
(21) Anmeldenummer: 17000512.8
(22) Anmeldetag: 28.03.2017
(51) Int. Cl.: B29C 44/18, B29D 99/00

(54) **VERFAHREN ZUM HERSTELLEN EINER POLSTERVORRICHTUNG FÜR EIN TRAGEGURTSYSTEM FÜR EIN ATEMGERÄT, POLSTERVORRICHTUNG, TRAGEGURTSYSTEM UND ATEMGERÄT**

(30) Priorität: 12.04.2016 DE 102016004311
(71) Anmelder: Dräger Safety AG & Co. KGaA, 23560 Lübeck (DE)
(72) Erfinder: Wilke, Bastian, 34128 Kassel (DE)
(74) Vertreter: Heinemeyer, Karsten

(57) **Zusammenfassung**

Die vorliegende Erfindung betrifft ein Verfahren zum Herstellen einer Polstervorrichtung (10a; 10b; 10c; 10d; 10e) für ein Tragegurtsystem (100) für ein Atemgerät (1000), wobei die Polstervorrichtung (10a; 10b; 10c; 10d) eine geschlossene Polsterkernhülle (20) und einen in der Polsterkernhülle (20) ausgestalteten Polsterkern (30) aufweist, gekennzeichnet durch folgende Schritte: Spritzgießen eines Hohlprofils (21), Einbringen eines Polsterkernmaterials in das Hohlprofil (21) zum Ausbilden des Polsterkerns (30) in dem Hohlprofil (21), und Schließen des Hohlprofils (21) zum Herstellen der geschlossenen Polsterkemhülle (20). Die Erfindung betrifft ferner eine Polstervorrichtung (10a; 10b; 10c; 10d; 10e) für ein Tragegurtsystem (100) für ein Atemgerät (1000), aufweisend eine geschlossene Polsterkernhülle (20) und einen in der Polsterkernhülle (20) angeordneten Polsterkern (30), wobei die Polsterkernhülle nahtlos und zumindest abschnittsweise als Spritzgussbauteil ausgestaltet ist. Außerdem betrifft die Erfindung ein Tragegurtsystem sowie ein Atemgerät mit dem Tragegurtsystem, wobei das Tragegurtsystem die erfindungsgemäße Polstervorrichtung (10a; 10b; 10c; 10d; 10e) aufweist.

## Beschreibung

Die vorliegende Erfindung betrifft ein Verfahren zum Herstellen einer Polstervorrichtung für ein Tragegurtsystem für ein Atemgerät. Ferner betrifft die Erfindung eine Polstervorrichtung für ein Tragegurtsystem für ein Atemgerät, aufweisend eine geschlossene Polsterkernhülle und einen in der Polsterkernhülle angeordneten Polsterkern. Außerdem betrifft die Erfindung ein Tragegurtsystem sowie ein Atemgerät mit dem Tragegurtsystem, wobei das Tragegurtsystem die Polstervorrichtung aufweist.

### STAND DER TECHNIK

Im Stand der Technik sind Polstervorrichtungen und Tragegurtsysteme für Atemgeräte bekannt. Tragegurtsysteme für Atemgeräte müssen eine hohe Widerstandsfähigkeit aufweisen, da sie beispielsweise im Feuerwehreinsatz höchsten Belastungen ausgesetzt sind. Gleichwohl sollen solche Tragegurtsysteme für den Nutzer auch über mehrere Stunden angenehm zu tragen sein. Darüber hinaus ist es wünschenswert, dass derartige Tragegurtsysteme einfach in der Handhabung sind, d.h., schnell und unkompliziert auf- und abnehmbar sind.

Zur Gewährleistung des Tragekomforts sind im Stand der Technik Polstervorrichtungen bekannt, die eine textile, genähte Hülle aufweisen, die einen elastischen Kern, insbesondere einen Schaumkern, umgeben. Für eine höhere Widerstandsfähigkeit gegenüber Feuer sind derartige textile Hüllen in der Regel aus flammhemmenden Materialien gefertigt. Außerdem gibt es Ausgestaltungen, in denen die textile Hülle innen mit einer Feuchtigkeitssperre versehen ist, um das Eindringen von Wasser zu reduzieren. Eine solche Polstervorrichtung ist direkt mittels Riegeln an einem Zugband eines Trageguts befestigt. Ein Vorteil derartiger Polstervorrichtungen ist, dass diese einfach in der Herstellung sind. Außerdem hat sich gezeigt, dass mit textilen Polstervorrichtungen ausgestattete Tragegurte relativ komfortabel zu tragen sind. Als Nachteil hat sich jedoch herausgestellt, dass die Feuchtigkeitssperre durch das Vernähen der Hülle verletzt wird, wodurch Feuchtigkeit zwischen elastischem Kern und textiler Hülle eindringen kann. Dadurch dauert der Trocknungsprozess für diese Art von Polstervorrichtung bzw. für den zugehörigen Tragegurt relativ lange. Bei einer Kontaminierung ist es ferner nicht oder nur äußerst schwer möglich, alle Schadstoffe restlos von einem Bereich zwischen elastischem Kern und textiler Hülle zu entfernen.

Ferner sind im Stand der Technik Tragegurtsysteme bekannt, bei welchen thermogeformte elastomerbeschichtete Teile gemeinsam mit einem Schaum in Form gebracht werden, wobei sich innenliegend ein Zugband befindet, welches mit einem Verbindungsclip verbunden ist und somit Kraft auf ein außenliegendes Zugband überträgt. Das innenliegende Zugband, das außenliegende Zugband sowie der Verbindungsclip sind bzw. werden gemeinsam mit einem Außensaum vernäht. Das innenliegende Zugband, das außenliegende Zugband sowie der Verbindungsclip sind dabei von einer gummierten Außenhülle umgeben. Eine solche Ausgestaltung ist relativ robust. Derartige Polstervorrichtungen bzw. entsprechende Tragevorrichtungen weisen jedoch einen komplexen Aufbau aus vielen Einzelteilen auf. Ferner sind viele Prozessschritte erforderlich, um eine solche Polstervorrichtung bzw. die zugehörige Tragevorrichtung herzustellen.

### OFFENBARUNG DER ERFINDUNG

Aufgabe der vorliegenden Erfindung ist es, die voranstehend beschriebenen Nachteile bei Tragegurtsystemen zumindest teilweise zu beheben. Insbesondere ist es Aufgabe der vorliegenden Erfindung, ein Verfahren zum einfachen und kostengünstigen Herstellen einer Polstervorrichtung für ein Tragegurtsystem für ein Atemgerät, sowie eine entsprechend einfach und kostengünstig ausgestaltete Polstervorrichtung und ein entsprechendes Tragegurtsystem sowie ein Atemgerät mit der Polstervorrichtung zur Verfügung zu stellen.

Die voranstehende Aufgabe wird durch die Patentansprüche gelöst. Insbesondere wird die voranstehende Aufgabe durch ein Verfahren nach Anspruch 1, eine Polstervorrichtung nach Anspruch 6, ein Tragegurtsystem nach Anspruch 15 sowie ein Atemgerät nach Anspruch 16 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Polstervorrichtung, dem Tragegurtsystem, dem Atemgerät und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung wird die Aufgabe durch ein Verfahren zum Herstellen einer Polstervorrichtung für ein Tragegurtsystem für ein Atemgerät gelöst, wobei die Polstervorrichtung eine geschlossene Polsterkernhülle und einen in der Polsterkernhülle ausgestalteten Polsterkern aufweist. Das Verfahren weist dabei folgende Schritte auf:
- Spritzgießen eines Hohlprofils,
- Einbringen eines Polsterkernmaterials in das Hohlprofil zum Ausbilden des Polsterkerns in dem Hohlprofil, und
- Schließen des Hohlprofils zum Herstellen der geschlossenen Polsterkernhülle.

Diese Schritte werden bevorzugt in der dargestellten Reihenfolge durchgeführt.

Durch das vorliegende Verfahren ist es möglich, die Polstervorrichtung auf besonders einfache und schnelle Weise herzustellen. Insbesondere das Spritzgießen des Hohlprofils ist ein Verfahrensschritt, der in besonders kurzer Zeit einfach realisierbar ist. Die Polstervorrichtung wird hierbei bevorzugt nahtlos hergestellt, d.h., auf einen Schritt des Vernähens von verschiedenen Einzelteilen der Polstervorrichtung kann verzichtet werden. Dadurch können nicht nur Zeit, sondern auch entsprechende Kosten gespart werden. Durch das Spritzgießen ist es außerdem möglich, grundsätzlich beliebige Formen des Hohlprofils herzustellen. So können auf besonders einfache Weise Hohlprofilformen hergestellt werden, die für eine Polstervorrichtung bzw. ein Tragegurtsystem mit einem hohen Tragekomfort geeignet sind.

Unter der Polstervorrichtung für das Tragegurtsystem für das Atemgerät ist vorliegend insbesondere eine Polstervorrichtung zu verstehen, die für den Feuerwehreinsatz geeignet ist. D.h., die Polstervorrichtung weist vorzugsweise eine gewisse Widerstandfähigkeit gehen Feuer und Hitze auf. Unter dem Atemgerät sind hierbei insbesondere ein Pressluftatemgerät für den Feuerwehr- und Rettungseinsatz sowie im weitesten Sinne ein Kreislaufatemschutzgerät zu verstehen.

Unter der geschlossenen Polsterkernhülle ist im Sinne der vorliegenden Erfindung eine vollständig geschlossene, insbesondere hermetisch dichte oder im Wesentlichen hermetisch dichte Hülle zu verstehen, die den Polsterkern gehäuseartig von einer Umgebung abschirmt. Die Polsterkernhülle wird hierbei nahtlos verarbeitet bzw. hergestellt. Die Polsterkernhülle wird bevorzugt flüssigkeitsdicht und ggf. auch gasdicht geschlossen, d.h., die Polsterkernhülle umschließt den Polsterkern flüssigkeitsdicht und ggf. auch gasdicht.

Das Spritzgießen wird vorliegend bevorzugt als Elastomerspritzgießen durchgeführt. Das Hohlprofil wird hierbei aus wenigstens einem Elastomer hergestellt, d.h., das Hohlprofil weist wenigstens ein Elastomer auf. Das Hohlprofil sowie die geschlossene Polsterkernhülle werden vorliegend bevorzugt als einstückiges und/oder monolithisches Bauteil hergestellt. Zeit- und entsprechend kostenaufwändige Zwischenschritte bei der Herstellung des Hohlprofils bzw. der Polsterkernhülle können hierdurch vermieden werden.

Das Polsterkernmaterial wird bevorzugt als Schaummaterial, beispielsweise Polyester-Schaummaterial und/oder PU-Schaummaterial, in das Hohlprofil eingebracht. Unter dem Hohlprofil ist hierbei ein Hohlprofil zu verstehen, das wenigstens auf einer Seite eine Öffnung aufweist. Vorzugsweise kommt wenigstens abschnittsweise ein offenes Profil zum Einsatz. Das Hohlprofil kann beispielsweise als ein kammerförmiges oder rohrförmiges Hohlprofil spritzgegossen werden. Das Schließen des Hohlprofils zum Herstellen der geschlossenen Polsterkernhülle kann mechanisch oder chemisch durchgeführt werden. So ist es beispielsweise möglich, dass das Hohlprofil durch ein Pressen, Verpressen oder Vernieten der wenigstens einen offenen Seite des Hohlprofils geschlossen wird. Ferner ist es möglich, dass das Hohlprofil bzw. die wenigstens eine offene Stelle oder Seite des Hohlprofils durch Zugabe eines weiteren Materials in den Bereich der wenigstens einen offenen Seite des Hohlprofils geschlossen wird. Alternativ oder zusätzlich ist es möglich, dass das Hohlprofil bzw. die wenigstens eine offene Seite des Hohlprofils durch eine chemische Behandlung des Hohlprofils und/oder des Polsterkernmaterials geschlossen wird.

Gemäß einer Weiterbildung der vorliegenden Erfindung ist es möglich, dass bei einem Verfahren das Hohlprofil nach dem Spritzgießen in einer Negativform angeordnet wird und von dem Einbringen des Polsterkernmaterials an, bis nach dem Schließen des Hohlprofils, in der Negativform angeordnet bleibt. D.h., das Hohlprofil bleibt bis zum Schließen desselben oder bis zur Fertigstellung der Polstervorrichtung in derselben Negativform. Dadurch kann die Polstervorrichtung besonders schnell, einfach und entsprechend kostensparend hergestellt werden. Grundsätzlich ist es hierbei auch möglich, dass bereits das Spritzgießen des Hohlprofils in der Negativform durchgeführt wird. In diesem Fall ist es ferner möglich, dass das Hohlprofil von seiner Fertigstellung durch das Spritzgießen an, bis zum Schließen des Hohlprofils oder bis zur Fertigstellung der Polstervorrichtung, in der Negativform angeordnet bleibt. Unter der Negativform ist eine Werkzeugform zu verstehen, in welche das Hohlprofil zumindest abschnittsweise formschlüssig einbringbar ist bzw. eingebracht wird. D.h., eine Innenseite der Werkzeugform weist eine zu einer Außenfläche des Hohlprofils zumindest abschnittsweise komplementäre Form auf.

Ferner ist es gemäß der vorliegenden Erfindung möglich, dass bei einem Verfahren das Hohlprofil, in welchem sich das Polsterkernmaterial befindet, durch Vulkanisieren des Hohlprofils und/oder des Polsterkernmaterials in wenigstens einem offenen Randbereich des Hohlprofils, geschlossen wird. Durch Vulkanisieren kann das Hohlprofil besonders materialsparend und entsprechend kostengünstig geschlossen werden. Das Hohlprofil kann hierbei durch Einfluss von definierter Zeit, Temperatur und Druck geschlossen werden. Von Vorteil kann es dabei sein, wenn bei der Vulkanisation Vulkanisationsbeschleuniger verwendet werden, durch welche das Hohlprofil schneller geschlossen und die Polstervorrichtung entsprechend schneller hergestellt werden können. Als Vulkanisationsbeschleuniger können zum Beispiel Dithiocarbamate, Thiuramdisulfide und -monosulfide, Xanthogenate und/oder Mercaptobenzothiazol verwendet werden.

Außerdem ist es erfindungsgemäß möglich, dass bei einem Verfahren bei dem Spritzgießen des Hohlprofils an dem Hohlprofil ein Gurtbandverbindungsmittel zum Herstellen einer Wirkverbindung mit einem Gurtband des Tragegurtsystems, insbesondere als integraler Bestandteil des Hohlprofils, ausgebildet wird. Das Gurtbandverbindungsmittel wird hierbei bevorzugt nahtlos an dem Hohlprofil ausgebildet. Das Gurtbandverbindungsmittel wird bevorzugt während des Spritzgießens des Hohlprofils ausgestaltet. Dadurch kann auf ein späteres Anbringen eines Gurtbandverbindungsmittels an dem Hohlprofil bzw. an der Polsterkernhülle, wofür ein separater Prozessschritt erforderlich wäre, verzichtet werden. Dadurch können Zeit und Kosten gespart werden. Eine integrale bzw. stoffschlüssige und/oder monolithische Verbindung zwischen dem Hohlprofil und dem Gurtbandverbindungsmittel ist außerdem robuster als eine Verbindung, die beispielsweise durch eine Naht bzw. ein Vernähen hergestellt wird. Außerdem ist die Polstervorrichtung bei einer integralen bzw. stoffschlüssigen und/oder monolithischen Verbindung zwischen dem Hohlprofil und dem Gurtbandverbindungsmittel im Vergleich zu einer Verbindung mittels Naht bzw. Vernähen besser, d.h., einfacher und schneller zu reinigen. Unter der Wirkverbindung ist vorliegend insbesondere eine Wirkverbindung zwischen dem Gurtband und der Polsterkernhülle bzw. der Polstervorrichtung zu verstehen.

Im Rahmen der vorliegenden Erfindung ist es darüber hinaus möglich, dass bei einem Verfahren das Polsterkernmaterial durch eine Einspritzvorrichtung in das Hohlprofil eingespritzt wird. Durch das Einspritzen des Polsterkernmaterials mittels einer Einspritzvorrichtung kann das Hohlprofil besonders schnell, zielgenau und auf automatisierte Weise mit dem Polsterkernmaterial befüllt werden. Als Einspritzvorrichtung kann ein Injektor in Form einer Einspritzdüse bereitgestellt werden.

Gemäß eines zweiten Aspekts der vorliegenden Erfindung ist eine Polstervorrichtung für ein Tragegurtsystem für ein Atemgerät bereitgestellt. Die Polstervorrichtung weist eine geschlossene Polsterkernhülle und einen in der Polsterkernhülle angeordneten Polsterkern auf. Die Polsterkernhülle ist hierbei zumindest abschnittsweise als nahtloses Spritzgussbauteil ausgestaltet. Eine solche Polstervorrichtung bringt die gleichen Vorteile mit sich, wie sie ausführlich mit Bezug auf die erfindungsgemäße Vorrichtung beschrieben worden sind. Hierzu ist es bevorzugt, dass die Polstervorrichtung gemäß einem wie vorstehend beschriebenen Verfahren hergestellt ist. Bei einer solchen Polstervorrichtung schottet die Polsterkernhülle den Polsterkern besonders flüssigkeits- und/oder gasdicht ab. Dadurch kann eine Dekontaminierung sowie im Allgemeinen eine Reinigung der Polstervorrichtung besonders einfach realisiert werden. Aufgrund der als nahtloses Spritzgussbauteil ausgestalteten Polsterkernhülle kann außerdem eine Trocknung der Polstervorrichtung in kürzester Zeit erfolgen.

Die Polsterkernhülle weist bevorzugt ein Elastomer, beispielsweise einen Ethylen-Propylen-Dien-Kautschuk (EPDM), auf oder besteht aus wenigstens einem Elastomer. Dadurch können eine hohe Abrasionsfestigkeit und eine entsprechende Langlebigkeit, Feuerbeständigkeit und Hitzebeständigkeit der Polstervorrichtung erreicht werden. Ferner ist die Polsterkernhülle nahtlos und zumindest abschnittsweise als Spritzgussbauteil ausgestaltet. Die Polsterkernhülle ist hierbei bevorzugt einstückig und/oder monolithisch ausgestaltet. Durch die einstückige und/oder monolithische Ausgestaltung kann die Polsterkernhülle den Polsterkern flüssigkeitsdicht, und bei Verwendung entsprechender Materialien, auch gasdicht gegenüber einer Umgebung umschließen. Die flüssigkeits- und ggf. gasdichte Umschließung des Polsterkerns kann insbesondere durch die nahtlose Ausgestaltung sichergestellt werden. Der Polsterkern weist bevorzugt ein Schaummaterial auf und/oder ist aus diesem hergestellt. Das Schaummaterial kann beispielsweise ein Polyester-Schaummaterial und/oder ein PU-Schaummaterial sein.

Gemäß einer Weiterbildung der vorliegenden Erfindung ist es möglich, dass die Polstervorrichtung an einer Außenseite der Polsterkernhülle ein Gurtbandverbindungsmittel zum Herstellen einer Wirkverbindung mit einem Gurtband des Tragegurtsystems ausgestaltet ist. Dadurch ist es besonders einfach möglich, eine Wirkverbindung zwischen der Polsterkernhülle bzw. der Polstervorrichtung und dem Gurtband des Tragegurtsystems herzustellen. Unter einer Wirkverbindung ist vorliegend insbesondere eine form- und/oder kraftschlüssige Verbindung zu verstehen, die durch das Gurtbandverbindungsmittel zumindest abschnittsweise zwischen der Polstervorrichtung und dem Gurtband herstellbar ist.

Im Rahmen der vorliegenden Erfindung kann es von Vorteil sein, wenn bei einer Polstervorrichtung das Gurtbandverbindungsmittel als integraler Bestandteil der Polsterkernhülle ausgestaltet ist. Dadurch ist das Gurtbandverbindungsmittel besonders sicher bzw. robust mit der Polsterkernhülle verbunden. Die Polsterkernhülle und das Gurtbandverbindungsmittel können hierzu beispielsweise stoffschlüssig verbunden werden bzw. sein und/oder als ein einstückiges und/oder monolithisches Bauteil ausgestaltet sein. Bei einer stoffschlüssigen Verbindung kann das Gurtbandverbindungsmittel mit der Polsterkernhülle beispielsweise verklebt oder verschweißt sein.

Ferner ist es gemäß der vorliegenden Erfindung möglich, dass bei einer Polstervorrichtung die Polsterkernhülle und das Gurtbandverbindungsmittel zusammen wenigstens einen Ringabschnitt, insbesondere einen geschlossenen Ringabschnitt, zur Aufnahme des Gurtbandes bilden. Durch den Ringabschnitt, d.h., einen ringförmig ausgestalteten Abschnitt, kann die Polstervorrichtung besonders sicher mit dem Gurtband verbunden bzw. zur Aufnahme des Gurtbandes bereitgestellt werden. Nachdem das Gurtband durch den wenigstens einen Ringabschnitt gefädelt und anschließend geschlossen wurde, kann sich die Polstervorrichtung grundsätzlich nicht mehr von dem Gurtband lösen. Hierbei ist es möglich, dass die Polstervorrichtung mehrere Ringabschnitte aufweist, die jeweils zur Aufnahme des Gurtbandes ausgestaltet sind. Dadurch kann die Polstervorrichtung besonders sicher und/oder materialsparend mit dem Gurtband verbunden bzw. zur Aufnahme des Gurtbandes bereitgestellt werden.

Außerdem ist es erfindungsgemäß möglich, dass bei einer Polstervorrichtung die Polsterkernhülle und das Gurtbandverbindungsmittel zusammen wenigstens einen C-förmigen Abschnitt zur Aufnahme des Gurtbandes bilden. Durch den wenigstens einen C-förmigen Abschnitt lässt sich die Polstervorrichtung besonders einfach mit dem Gurtband verbinden, d.h., das Gurtband kann besonders einfach in dem C-förmigen Abschnitt aufgenommen werden. Bevorzugt sind zwei C-förmige Abschnitte ausgestaltet, deren offene Enden einander zugewandt sind. Die Polsterkernhülle und das Gurtbandverbindungsmittel bilden die C-Form zumindest in einem Querschnitt durch die Polsterkernhülle und das Gurtbandverbindungsmittel.

Darüber hinaus kann es im Rahmen der vorliegenden Erfindung von Vorteil sein, wenn sich bei einer Polstervorrichtung wenigstens ein Abschnitt des Gurtbandverbindungsmittels über wenigstens 50%, insbesondere wenigstens 80%, der Länge der Polsterkernhülle erstreckt. Dadurch kann die Polstervorrichtung im Einsatz besonders gleichmäßig über die gesamte Polstervorrichtung oder zumindest den überwiegenden Bereich der Polstervorrichtung durch das Gurtband belastet bzw. mit einer entsprechenden Kraft beaufschlagt werden. Die Länge der Polsterkernhülle ist als eine Länge der längsten Seite der Polsterkernhülle zu verstehen.

Außerdem kann es im Rahmen der vorliegenden Erfindung von Vorteil sein, wenn das Gurtbandverbindungsmittel wenigstens einen Arretiervorsprung, insbesondere wenigstens einen gestuften und/oder hinterschnittenen Arretiervorsprung, zum Arretieren des Gurtbandes in einer definierten Position an der Polsterkernhülle, aufweist. Durch den Arretiervorsprung lässt sich das Gurtband, das wenigstens ein entsprechendes Durchgangsloch aufweist, besonders einfach, schnell und sicher an der Polsterkernhülle bzw. an der Polstervorrichtung befestigen. Für einen guten Halt des Gurtbandes an der Polsterkernhülle kann der Arretiervorsprung beispielsweise pilzförmig ausgestaltet sein. Durch einen Pilzkopf der Arretiervorrichtung lässt sich das Gurtband außerdem besonders leicht und zerstörungsfrei über den Arretiervorsprung ziehen. Die Hinterschneidung muss hierbei nicht stufenförmig sein, sondern kann auch kontinuierlich ausgestaltet sein.

Von weiterem Vorteil kann es sein, wenn bei einer erfindungsgemäßen Polstervorrichtung der wenigstens eine Arretiervorsprung ein Sackloch, insbesondere ein gestuftes und/oder hinterschnittenes Sackloch, zur Aufnahme eines Arretierzapfens aufweist. Nachdem das Gurtband, das wenigstens ein korrespondierendes Durchgangsloch aufweist, über den Arretiervorsprung gezogen wurde, kann der Arretiervorsprung durch Einbringen des Arretierzapfens in das Sackloch leicht radial nach außen, bevorzugt elastisch, ausgedehnt werden, wodurch das Gurtband besonders fest mit der Polsterkernhülle bzw. mit der Polstervorrichtung verbindbar ist. Das Sackloch weist hierzu bevorzugt wenigstens eine konvexe oder konkave Innenfläche auf, die komplementär zu einer entsprechend konvex oder konkav ausgestalteten Außenfläche des Arretierzapfens ausgestaltet ist.

Bei einer Weiterbildung der vorliegenden Erfindung kann bei einer Polstervorrichtung die Polsterkernhülle mehrere Polsterkernkammern aufweisen, wobei in den Polsterkernkammern jeweils ein Polsterkern ausgestaltet ist. Dadurch kann die Polstervorrichtung besonders flexibel und entsprechend komfortabel tragbar ausgestaltet sein.

Gemäß eines dritten Aspekts der vorliegenden Erfindung ist ein Tragegurtsystem für ein Atemgerät bereitgestellt, wobei das Tragegurtsystem eine wie vorstehend dargestellte Polstervorrichtung aufweist. Damit bringt das erfindungsgemäße Tragegurtsystem die gleichen Vorteile mit sich, wie sie ausführlich mit Bezug auf die erfindungsgemäße Polstervorrichtung beschrieben worden sind.

Gemäß eines noch weiteren Aspekts der vorliegenden Erfindung wird ein Atemgerät mit dem vorstehenden Tragegurtsystem gemäß des dritten Aspekts der Erfindung zur Verfügung gestellt. Damit bringt auch das erfindungsgemäße Atemgerät die gleichen Vorteile mit sich, wie sie ausführlich mit Bezug auf die erfindungsgemäße Polstervorrichtung gemäß dem zweiten Aspekt der Erfindung beschrieben worden sind.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine geschnittene Darstellung einer Polstervorrichtung gemäß einer ersten Ausführungsform der vorliegenden Erfindung,
- Figur 2: eine Draufsicht auf die in Fig. 1 dargestellte Polstervorrichtung,
- Figur 3: eine geschnittene Darstellung einer Polstervorrichtung gemäß einer zweiten Ausführungsform der vorliegenden Erfindung,
- Figur 4: eine Draufsicht auf die in Fig. 3 dargestellte Polstervorrichtung,
- Figur 5: eine geschnittene Darstellung einer Polstervorrichtung gemäß einer dritten Ausführungsform der vorliegenden Erfindung,
- Figur 6: eine Draufsicht auf die in Fig. 5 dargestellte Polstervorrichtung,
- Figur 7: eine geschnittene Darstellung einer Polstervorrichtung gemäß einer vierten Ausführungsform der vorliegenden Erfindung,
- Figur 8: eine Draufsicht auf die in Fig. 7 dargestellte Polstervorrichtung,
- Figur 9: eine weitere geschnittene Darstellung einer Polstervorrichtung gemäß der dritten Ausführungsform der vorliegenden Erfindung,
- Figur 10: ein erfindungsgemäßes Atemgerät mit einem erfindungsgemäßen Tragegurtsystem, und
- Figuren 11 bis 14: ein Verfahren zum Herstellen einer Polstervorrichtung gemäß einer fünften Ausführungsform der vorliegenden Erfindung.

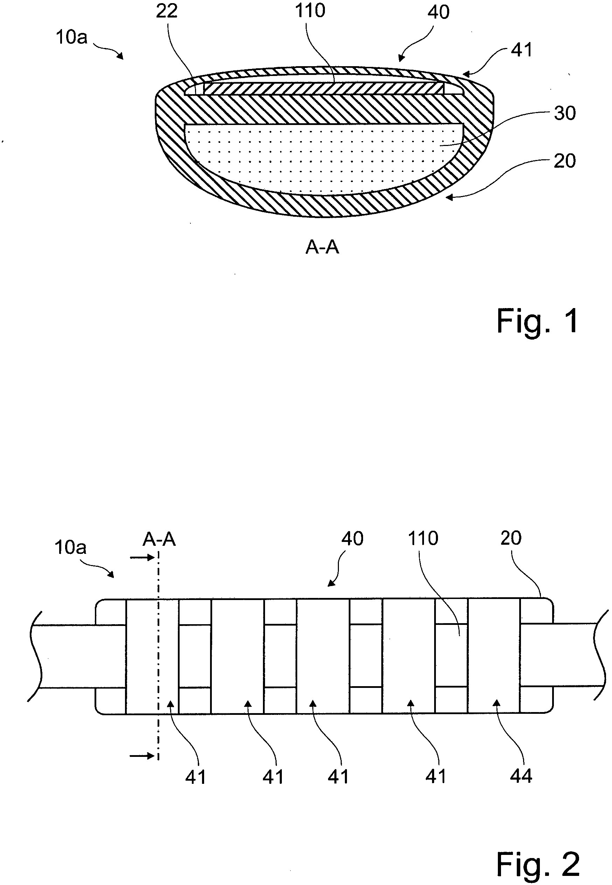

Elemente mit gleicher Funktion und Wirkungsweise sind in den Fig. 1 bis 14 jeweils mit denselben Bezugszeichen versehen.

Fig. 1 zeigt eine geschnittene Polstervorrichtung 10a für ein Tragegurtsystem 100 gemäß einer ersten Ausführungsform. Die Polstervorrichtung 10a weist eine geschlossene Polsterkernhülle 20 und einen in der Polsterkernhülle 20 angeordneten Polsterkern 30 auf. Die in Fig. 1 dargestellte Polsterkernhülle 20 ist als ein nahtloses Spritzgussbauteil ausgestaltet. Mit der Polsterkernhülle 20 ist gemäß Fig. 1 ein Gurtbandverbindungsmittel 40 einstückig verbunden. D.h., das Gurtbandverbindungsmittel 40 ist als integraler Bestandteil der Polsterkernhülle 20 ausgestaltet. Das Gurtbandverbindungsmittel 40 und die Polsterkernhülle 20 bilden zusammen einen Ringabschnitt 41, durch welchen ein Gurtband 110 verläuft bzw. in welchem das Gurtband 110 angeordnet ist. Das Gurtbandverbindungsmittel 40 ist gemäß Fig. 1 an einer Außenseite 22 der Polsterkernhülle 20 ausgestaltet. Für ein besseres Verständnis der Polstervorrichtung 10a ist diese in Fig. 2 in einer Draufsicht dargestellt.

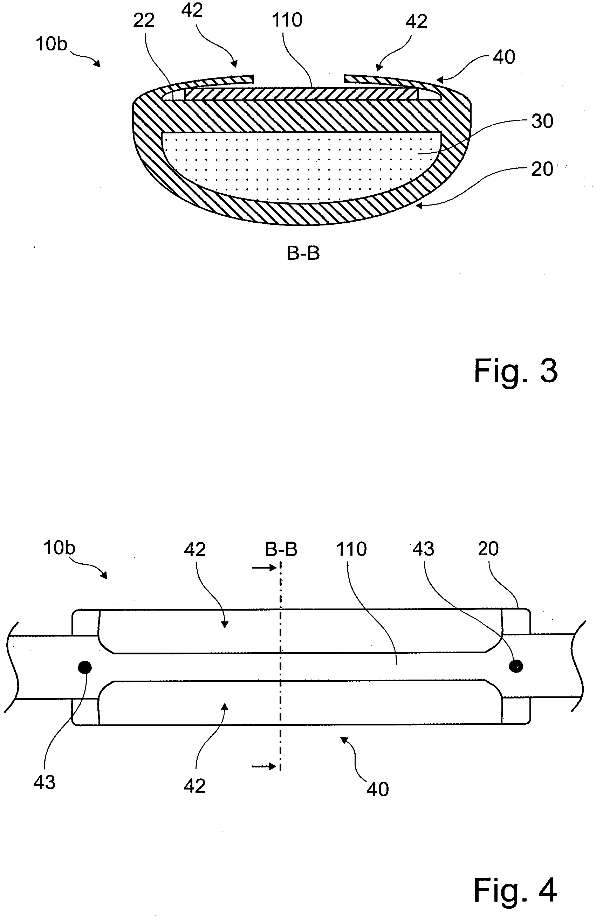

Fig. 3 zeigt eine geschnittene Polstervorrichtung 10b für ein Tragegurtsystem 100 gemäß einer zweiten Ausführungsform. Die Polstervorrichtung 10b gemäß der zweiten Ausführungsform unterscheidet sich insbesondere dadurch von der Polstervorrichtung 10a gemäß der ersten Ausführungsform, dass das Gurtbandverbindungsmittel 40 und die Polsterkernhülle 20 zusammen zwei C-förmige Abschnitte 42 zur Aufnahme des Gurtbandes 110 bilden. Für ein besseres Verständnis der Polstervorrichtung 10b ist diese in Fig. 4 in einer Draufsicht dargestellt. In der Draufsicht sind ferner Nieten 43 dargestellt, durch welche das Gurtband 110 an der Polsterkernhülle 20 bzw. an der Polstervorrichtung 10b für einen besseren Halt fixiert ist. Wie außerdem aus Fig. 4 hervorgeht, erstrecken sich die beiden C-förmigen Abschnitte 42 über mehr als 80% der Länge der Polsterkernhülle 20.

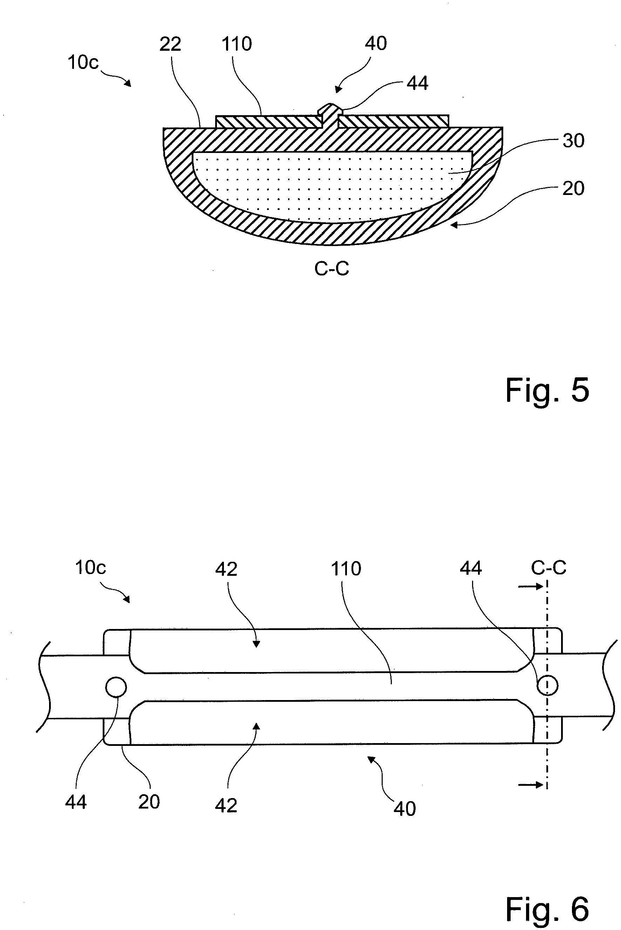

Fig. 5 zeigt eine geschnittene Polstervorrichtung 10c für ein Tragegurtsystem 100 gemäß einer dritten Ausführungsform. Die Polstervorrichtung 10c gemäß der dritten Ausführungsform unterscheidet sich insbesondere dadurch von der Polstervorrichtung 10a gemäß der ersten Ausführungsform, dass das Gurtbandverbindungsmittel 40 zwei gestufte und hinterschnittene, genauer gesagt pilzförmige Arretiervorsprünge 44, zum Arretieren des Gurtbandes 110 in einer definierten Position an der Polsterkernhülle 20, aufweist. Für ein besseres Verständnis der Polstervorrichtung 10c ist diese in Fig. 6 in einer Draufsicht dargestellt.

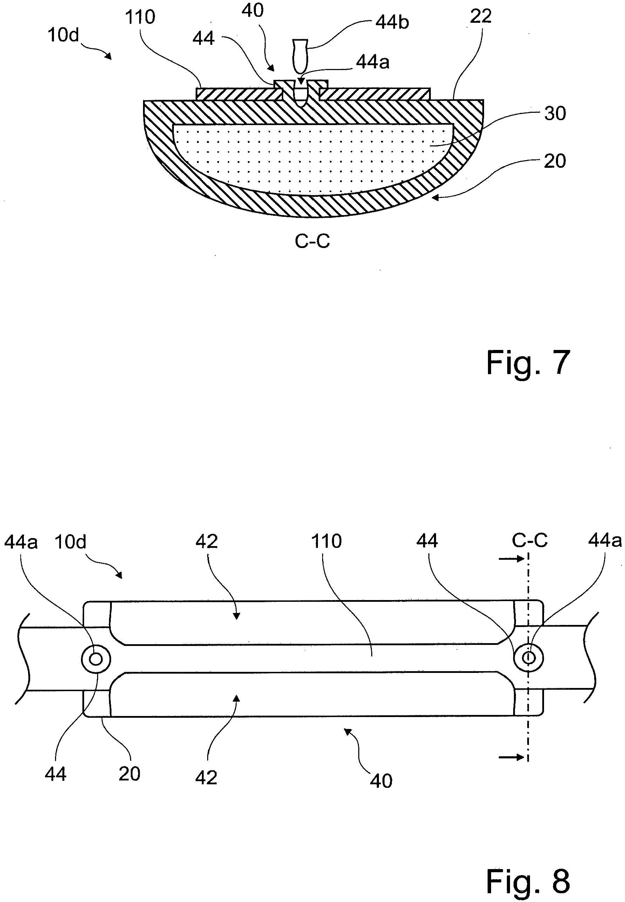

Fig. 7 zeigt eine Polstervorrichtung 10d für ein Tragegurtsystem 100 gemäß einer vierten Ausführungsform. Die Polstervorrichtung 10d gemäß der vierten Ausführungsform unterscheidet sich insbesondere dadurch von der Polstervorrichtung 10a gemäß der ersten Ausführungsform, dass zwei Arretiervorsprünge 44 jeweils ein kontinuierlich hinterschnittenes Sackloch 44a zur Aufnahme eines Arretierzapfens 44b aufweisen. Durch ein Einbringen des Arretierzapfens 44b in das Sackloch 44a, nachdem das Gurtband 110 über den zugehörigen Arretiervorsprung 44 gezogen wurde, kann das Gurtband 110 sicher an der Polstervorrichtung 10d fixiert werden. Für ein besseres Verständnis der Polstervorrichtung 10d ist diese in Fig. 8 in einer Draufsicht dargestellt.

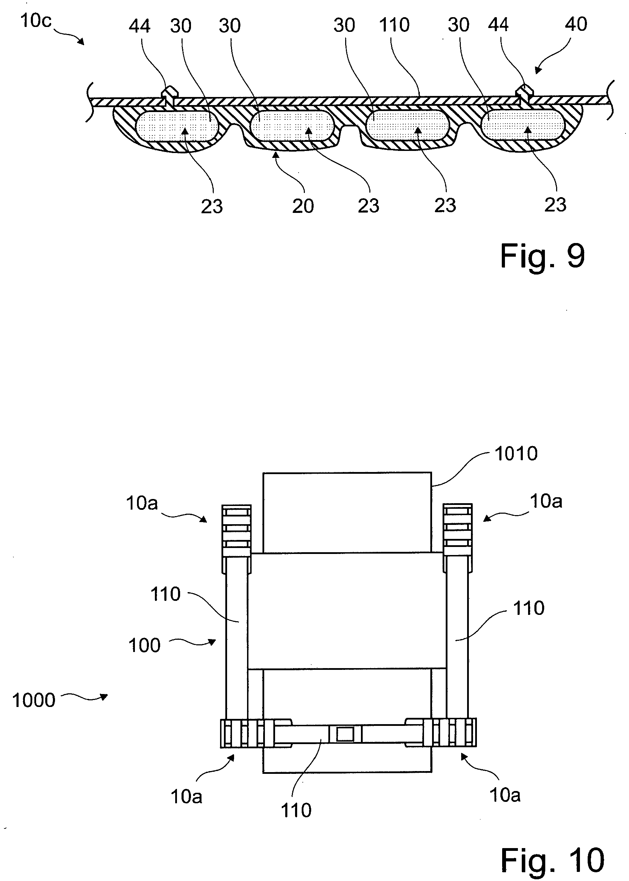

Fig. 9 zeigt die Polstervorrichtung 10c gemäß der dritten Ausführungsform in einer weiteren Schnittdarstellung. Wie in Fig. 9 dargestellt, weist die Polsterkernhülle 20 mehrere Polsterkernkammern 23 auf, wobei in den Polsterkernkammern 23 jeweils ein Polsterkern 30 ausgestaltet ist.

In Fig. 10 ist ein Atemgerät 1000 mit einem Tragegurtsystem 100 dargestellt. Das Atemgerät 1000 weist ferner ein Rückenteil 1010 auf, an bzw. mit welchem Funktionseinheiten des Atemgerätes 1000 montierbar sind. Das in Fig. 10 dargestellte Atemgerät 1000 weist vier Polstervorrichtungen 10a auf. Das in Fig. 10 dargestellte Atemgerät 1000 stellt ein Kreislaufatemschutzgerät dar.

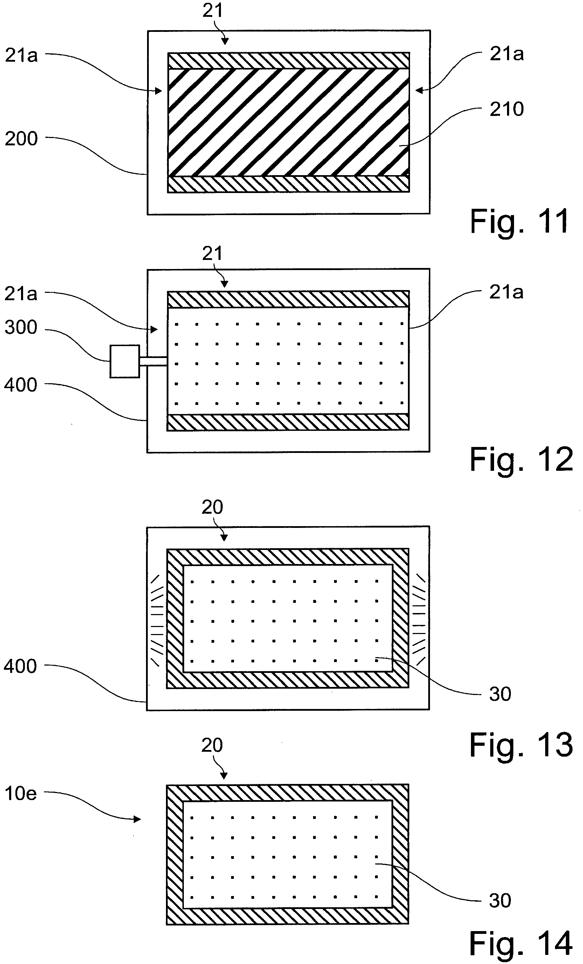

Mit Bezug auf die Figuren 11 bis 14 wird anschließend ein Verfahren zum Herstellen einer Polstervorrichtung 10e gemäß einer fünften Ausführungsform beschrieben. Die Polstervorrichtung 10e gemäß der fünften Ausführungsform stellt eine besonders einfache Art der Ausgestaltung einer erfindungsgemäßen Polstervorrichtung dar.

Gemäß dem in den Figuren 11 bis 14 dargestellten Verfahren wird in einem ersten Schritt, der insbesondere in Fig. 11 dargestellt ist, ein offenes Hohlprofil 21 durch Spritzgießen in einem Werkzeug 200, das einen Formkern 210 aufweist, hergestellt. In einem nächsten Schritt, der insbesondere in Fig. 12 dargestellt ist, wird das Hohlprofil 21 in einer Negativform 400 angeordnet. In der Negativform 400 wird nun durch eine Einspritzvorrichtung 300 in Form eines Injektors Polsterkernmaterial in das Hohlprofil 21 eingebracht, um darin einen Polsterkerns 30 auszubilden. In einem darauffolgenden Schritt, der insbesondere in Fig. 13 dargestellt ist, wird das Hohlprofil 21 zum Herstellen einer geschlossenen Polsterkernhülle 20 durch Vulkanisieren des Hohlprofils 21 und des Polsterkernmaterials in den beiden offenen Randbereichen 21a des Hohlprofils 21 geschlossen. Das Hohlprofil 21 bleibt von dem Einbringen des Polsterkernmaterials 30 an, bis nach dem Schließen des Hohlprofils 21, in der Negativform 400 angeordnet. In einem abschließenden Schritt, der durch Fig. 14 dargestellt ist, kann die fertiggestellte Polstervorrichtung 10e aus der Negativform entnommen werden. Durch das vorliegende Verfahren ist eine werkzeuggebundene Herstellung einer nahtlosen Polsterkernhülle in nur einem Prozessschritt möglich.

Die Erfindung lässt neben den dargestellten Ausführungsformen weitere Gestaltungsgrundsätze zu. So ist es beispielsweise möglich, dass das Werkzeug 200 und die Negativform 400 dasselbe Werkzeug darstellen. D.h., die Polstervorrichtung 10e müsste in diesem Fall bei der Herstellung derselben nicht aus dem Werkzeug entnommen werden. Ferner ist es möglich, ein Hohlprofil mit nur einer geöffneten Seite oder mehr als zwei geöffneten Seiten durch das vorliegende Verfahren herzustellen und danach wie vorstehend dargestellt zu schließen.

### BEZUGSZEICHENLISTE

- 10a, 10b, 10c, 10d, 10e: Polstervorrichtung
- 20: Polsterkernhülle
- 21: Hohlprofil
- 21a: offener Randbereich
- 22: Außenseite
- 23: Polsterkernkammer
- 30: Polsterkern
- 40: Gurtbandverbindungsmittel
- 41: Ringsegment
- 42: C-förmiger Abschnitt
- 43: Niete
- 44: Arretiervorsprung
- 44a: Sackloch
- 44b: Zapfen

- 100: Tragegurtsystem
- 110: Gurtband
- 200: Werkzeug
- 210: Formkern
- 300: Injektor
- 400: Negativform

- 1000: Atemgerät
- 1010: Rückenteil

## Patentansprüche

1. Verfahren zum Herstellen einer Polstervorrichtung (10a; 10b; 10c; 10d; 10e) für ein Tragegurtsystem (100) für ein Atemgerät (1000), wobei die Polstervorrichtung (10a; 10b; 10c; 10d) eine geschlossene Polsterkernhülle (20) und einen in der Polsterkernhülle (20) ausgestalteten Polsterkern (30) aufweist,
**gekennzeichnet durch** folgende Schritte:
- Spritzgießen eines Hohlprofils (21),
- Einbringen eines Polsterkernmaterials in das Hohlprofil (21) zum Ausbilden des Polsterkerns (30) in dem Hohlprofil (21), und
- Schließen des Hohlprofils (21) zum Herstellen der geschlossenen Polsterkernhülle (20).

2. Verfahren nach Anspruch 1,
**dadurch gekennzeichnet, dass**
das Hohlprofil (21) nach dem Spritzgießen in einer Negativform (400) angeordnet wird und von dem Einbringen des Polsterkernmaterials (30) an, bis nach dem Schließen des Hohlprofils (21), in der Negativform (400) angeordnet bleibt.

3. Verfahren nach einem der voranstehenden Ansprüche,
**dadurch gekennzeichnet, dass**
das Hohlprofil (21), in welchem sich das Polsterkernmaterial befindet, durch Vulkanisieren des Hohlprofils (21) und/oder des Polsterkernmaterials in wenigstens einem offenen Randbereich (21a) des Hohlprofils (21), geschlossen wird.

4. Verfahren nach einem der voranstehenden Ansprüche,
**dadurch gekennzeichnet, dass**
bei dem Spritzgießen des Hohlprofils (21) an dem Hohlprofil (21) ein Gurtbandverbindungsmittel (40) zum Herstellen einer Wirkverbindung mit einem Gurtband (110) des Tragegurtsystems (100), insbesondere als integraler Bestandteil des Hohlprofils (21), ausgebildet wird.

5. Verfahren nach einem der voranstehenden Ansprüche,
**dadurch gekennzeichnet, dass**
das Polsterkernmaterial durch eine Einspritzvorrichtung (300) in das Hohlprofil (21) eingespritzt wird.

6. Polstervorrichtung (10a; 10b; 10c; 10d; 10e) für ein Tragegurtsystem (100) für ein Atemgerät (1000), aufweisend eine geschlossene Polsterkernhülle (20) und einen in der Polsterkernhülle (20) angeordneten Polsterkern (30),
**dadurch gekennzeichnet, dass**
die Polsterkernhülle nahtlos und zumindest abschnittsweise als Spritzgussbauteil ausgestaltet ist.

7. Polstervorrichtung (10a; 10b; 10c; 10d) nach Anspruch 6,
**dadurch gekennzeichnet, dass**
an einer Außenseite (22) der Polsterkernhülle (20) ein Gurtbandverbindungsmittel (40) zum Herstellen einer Wirkverbindung mit einem Gurtband (110) des Tragegurtsystems (100) ausgestaltet ist.

8. Polstervorrichtung (10a; 10b; 10c; 10d) nach Anspruch 7,
**dadurch gekennzeichnet, dass**
das Gurtbandverbindungsmittel (40) als integraler Bestandteil der Polsterkernhülle (20) ausgestaltet ist.

9. Polstervorrichtung (10a) nach Anspruch 7 oder 8,
**dadurch gekennzeichnet, dass**
die Polsterkernhülle (20) und das Gurtbandverbindungsmittel (40) zusammen wenigstens einen Ringabschnitt (41) zur Aufnahme des Gurtbandes (110) bilden.

10. Polstervorrichtung (10b) nach einem der Ansprüche 7 bis 9,
**dadurch gekennzeichnet, dass**
die Polsterkernhülle (20) und das Gurtbandverbindungsmittel (40) zusammen wenigstens einen C-förmigen Abschnitt (42) zur Aufnahme des Gurtbandes (110) bilden.

11. Polstervorrichtung (10b; 10c; 10d) nach einem der Ansprüche 7 bis 10
**dadurch gekennzeichnet, dass**
sich wenigstens ein Abschnitt des Gurtbandverbindungsmittels (40) über wenigstens 50%, insbesondere wenigstens 80%, der Länge der Polsterkernhülle (20) erstreckt.

12. Polstervorrichtung (10c; 10d) nach einem der Ansprüche 7 bis 11
**dadurch gekennzeichnet, dass**
das Gurtbandverbindungsmittel (40) wenigstens einen Arretiervorsprung (44), insbesondere wenigstens einen gestuften und/oder hinterschnittenen Arretiervorsprung (44), zum Arretieren des Gurtbandes (110) in einer definierten Position an der Polsterkernhülle (20), aufweist.

13. Polstervorrichtung (10d) nach Anspruch 12,
**dadurch gekennzeichnet, dass**
der wenigstens eine Arretiervorsprung (44) ein Sackloch (44a), insbesondere ein gestuftes und/oder hinterschnittenes Sackloch (44a), zur Aufnahme eines Arretierzapfens (44b) aufweist.

14. Polstervorrichtung (10c) nach einem der Ansprüche 6 bis 13
**dadurch gekennzeichnet, dass**
die Polsterkernhülle (20) mehrere Polsterkernkammern (23) aufweist und in den Polsterkernkammern (23) jeweils ein Polsterkern (30) ausgestaltet ist.

15. Tragegurtsystem (100) für ein Atemgerät, aufweisend eine Polstervorrichtung (10a; 10b; 10c; 10d; 10e) nach einem der Ansprüche 6 bis 14.

16. Atemgerät (100) mit einem Tragegurtsystem (100) nach Anspruch 15.
